# EUROPEAN PATENT SPECIFICATION

(11) **EP 0 728 653 B1**
(45) Date of publication and mention of the grant of the patent: **17.05.2000**
(21) Application number: 96300739.8
(22) Date of filing: 02.02.1996
(51) Int. Cl.: B62D 5/04, G01L 5/22

(54) **Electrically operated type power steering apparatus**
Elektrische Servolenkung
Direction assistée électrique

(30) Priority: 07.02.1995 JP 1911895
(43) Date of publication of application: 28.08.1996
(73) Proprietor: NSK LTD, Shinagawa-ku, Tokyo (JP)
(72) Inventor: Eda, Hiroshi, Maebashi-shi, Gunma-ken (JP)
(74) Representative: Abbie, Andrew Kenneth

(56) References cited:
- DE-A- 4 141 160
- JP-U- 60 137 339

## Description

This invention relates to a power steering apparatus.

In the art of power steering apparatus of vehicles, there is known one as shown, for example, in Japanese Utility Model Application Laid-Open No. 60-137339 wherein when the steering of wheels is effected, a steering torque is detected so as to assist a manual force applied to a steering wheel. In such a construction, a cam hole in an oblique direction with respect to the axial direction is formed in the cylinder portion of an input shaft (control shaft), a ball groove (lead groove) in the axial direction is formed in an output shaft (pinion), and a circumferential groove (guide groove) is formed in the inner surface of a sensor ring. Also, design is made such that by two opposed balls fitted in the respective grooves, the relative angular displacement of the input and output shafts is converted into axial displacement. Further, between the sensor ring and the input shaft, two opposed balls are provided on the same plane as the balls for the conversion of displacement so as to support the sensor ring.

Such an apparatus according to the prior art suffers from the following problems. When the steering wheel is to be rotated in a no-load state, it is necessary to make the vibration of the end surface of the circumferential groove of the sensor ring small. However, there is only one row of balls supporting the sensor ring in the circumferential direction and therefore, when a load is applied to a portion of the circumferential groove of the sensor ring, the inclination of the sensor ring results, whereby the vibration of the end surface of the sensor ring may become great. Such vibration of the end surface gives rise to the problem that the erroneous measurement of a detector results.

Also, when the sensor ring is inclined, the inner surface of the sensor ring comes into contact with the outer diameter portion of the input shaft, and this also heads to the problem that there will occur the so-called torque hysteresis that the measured value will not return to zero even if the steering torque returns to zero.

The present invention has as an object the prevention or alleviation of the problems highlighted in the Foregoing.

The invention provides a power steering apparatus comprising: a first shaft connected by resilient means to a second shaft, said resilient means allowing relative angular displacement between said first shaft and said second shaft in proportion to a torque applied between said first shaft and said second shaft and a sensor ring for detecting said relative angular displacement, said sensor ring being disposed around at least three spiral grooves provided in said first shaft, said sensor ring comprising a first circumferential groove along which are disposed a first plurality of balls, each one of said first plurality of balls being disposed along a respective spiral groove, and slits being provided in said second shaft for preventing rotation of said first plurality of balls about said second shaft such that said relative angular displacement causes said first plurality of balls to move said sensor ring axially relative to said first shaft, said sensor ring comprising a second circumferential groove along which are disposed a second plurality of balls, each one of said second plurality of balls being disposed along a respective spiral groove to support said sensor ring to prevent inclination thereof with respect to said first shaft.

Preferably, said first shaft is an output shaft and said second shaft is an input shaft.

Alternatively, said first shaft is an input shaft and said second shaft is an output shaft.

The apparatus may comprise a housing in which is mounted a motor having a rotary shaft.

As shown in the embodiment described hereinafter, the apparatus may comprise a power transmitting mechanism for connecting said rotary shaft and said output shaft allowing power to be transmitted from said motor to said output shaft.

Preferably, a detector is provided for detecting movement of said sensor ring axially relative to said first shaft.

The number of slits may correspond to the number of spiral grooves.

The apparatus may comprise biasing means for biasing said sensor ring axially thereby urging said first plurality of balls and said second plurality of balls against a wall of a respective said spiral groove.

The resilient means is preferably a torsion bar.

In order that the present invention may be well understood an embodiment thereof, which is given by way of example only, will now be described with reference to the accompanying drawings, in which:
Fig. 1 is a view, partly in axial cross-section, of an electrically operated type power steering apparatus; and
Fig. 2 is an exploded view of the essential portions of the electrically operated type power steering apparatus of Fig. 1.

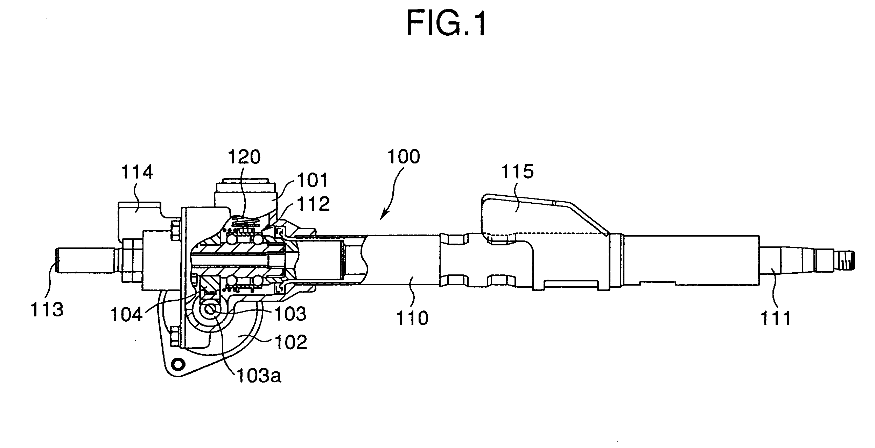

Fig. 1 is a view, partly in axial cross-section, of an electrically operated type power steering apparatus 100.

In Fig. 1, the electrically operated type power steering apparatus 100 is comprised of a housing 101 and a tube 110 extending therefrom. The housing 101 is fixed to a vehicle body (not shown) by a bracket 114, and the tube 110 is fixed to the vehicle body by a bracket 115. An input shaft 111 having one end thereof adapted to be connected to a steering wheel (not shown) extends inside the tube 110 and is supported for rotation relative to the tube 110. The other end of the input shaft 111 is connected to a torque detecting device 112 which is detecting means.

The torque detecting device 112 in turn is connected to an output shaft 113 extending in the housing 101 and rotatably supported therein. The output shaft 113 is connected to a steering device, not shown, and is adapted to transmit a torque for steering wheels. The torque detecting device 112 is adapted to detect a relative (steering) torque acting between the input shaft 111 and the output shaft 113 to control an auxiliary steering force.

Near the torque detecting device 112, a worm wheel 104 is mounted on the output shaft 113 coaxially therewith. The worm wheel 104 is in meshing engagement with the worm gear 103a of a speed reducer input shaft 103 which extends in a direction perpendicular to the plane of the drawing sheet of Fig. 1. The speed reducer input shaft 103 is connected to the rotary shaft (not shown) of a motor 102.

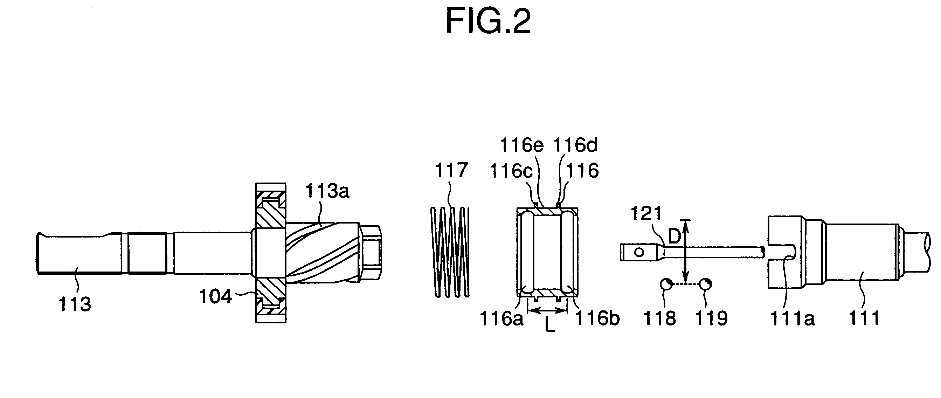

Fig. 2 is an exploded view of the essential portions of the torque detector 112 of Fig. 1. Referring to Figs. 1 and 2, three slits llla (only one of which is shown) extending axially are formed in the inner end of the input shaft 111. On the other hand, three spiral grooves 113a are formed in the inner end of the output shaft 113. In an assembled state, a substantially tubular sensor ring 116 is provided around the spiral grooves 113a.

The sensor ring 116 has its inner periphery formed with inner peripheral, or circumferential, grooves 116a and 116b extending circumferentially thereof and spaced apart from each other, and has its outer periphery formed with two rows of walls 116c and 116d extending circumferentially thereof. An outer peripheral groove 116e is formed between the two rows of walls 116c and 116d. A coil spring 117 is provided between the sensor ring 116 and the worm wheel 104 on the output shaft 113. In the assembled state, the coil spring 117 biases the wall 116c of the sensor ring 116 axially (rightwardly as viewed in Fig. 2), and urges balls which will be described later against the wall of one of the spiral grooves to thereby effect so-called "backlash elimination".

In the assembled state, the inner peripheral grooves 116a and 116b of the sensor ring 116 have disposed therealong three first balls 118 and three second balls 119, respectively. The first and second balls 118 and 119 are all disposed along the spiral grooves 113a and roll thereon, but at the same time, only the second balls 119 are adapted to be fitted in the slits 111a.

The slits 111a prevent rotation of balls 119 about the input shaft 111 such that relative angular displacement between the input shaft 111 and the output shaft 113 causes the balls 119 to move the sensor ring axially relative to the output shaft 113. When the spacing between the inner peripheral grooves 116a and 116b is defined as L and the PCD (pitch circle diameter) of the balls is defined as D, there is such a relation that L/D ≥ 0.5. The measuring element of a torque detector 120 (Fig. 1) is adapted to be fitted in the outer peripheral groove 116e of the sensor ring 116. The input shaft 111 and the output shaft 113 are connected together by a torsion bar 121 which is a resilient member.

The action of the electrically operated type power steering apparatus shown in Fig. 1 will hereinafter be described. The input shaft 111 is rotated by the inputting of a steering torque from the steering wheel, not shown, and a rotational torque is transmitted to the output shaft 113 through the torsion bar 121 of the torque detecting device 112. The output shaft is connected to the steering device (not shown) as described above so as to transmit a steering torque. In this case, the value of the torque detected by the torque detecting device 112 is sent to a judgment circuit, not shown, in which it is compared with a predetermined value. When this torque exceeds the predetermined value, it is a case where an auxiliary steering force is required and therefore, a driving command conforming to the detected torque is outputted to drive the motor 102. The motor 102 driven by the driving command rotates the speed reducer input shaft 103, the rotational torque of which in turn is transmitted to the output shaft 113 through the worm wheel 104. On the other hand, when the value of the torque detected by the torque detecting device 112 is lower than the predetermined value, the auxiliary steering force is unnecessary and therefore, the motor 102 is not driven. The speed reducer input shaft 103 and the worm wheel 104 together constitute a power transmitting mechanism.

The operation of the torque detecting device 112 will be further described. In conformity with the steering torque acting between the input shaft 111 and the output shaft 113, the torsion bar 121 twists, that is, is resiliently deformed, and relative angular displacement occurs between the input shaft 111 and the output shaft 113. When the relative angular displacement thus occurs, the balls 118 and 119 fitted in the spiral grooves try to rotate with the output shaft 113. Since, however, the balls 119 are fitted also in the slits 111a of the input shaft 111, they become movable along only the slits 111a and are, therefore, prevented from rotating about the input shaft 111. Thus, the balls 119 receive forces from both of the spiral grooves 113a and the slits 111a and roll along the spiral grooves 113a, and apply forces so as to axially move the sensor ring 116. On the other hand, the balls 118 receive a force from the sensor ring 116 and likewise roll on the spiral grooves 113a. Design is made such that the amount of axial movement of the sensor ring 116 is detected by the detecting element of the torque detector 120, whereby the steering torque is detected.

Now, as is apparent from the foregoing, if there are the inner peripheral groove 116b of the sensor ring 116 and a row of balls 119, the steering torque can theoretically be detected. However, if an attempt is made to detect the steering torque by a row of balls in this manner, there will arise the following problem. Unless a certain degree of gap is provided between the spiral grooves and the balls, the friction therebetween will become great and smooth movement will not be accomplished. On the other hand, if the gap between the spiral grooves and the balls is made great to accomplish smooth movement, the sensor ring will be inclined by the received movement and the stable detection of the torque will become impossible.

In the present embodiment, the balls 118 are provided besides the balls 119 and further, the inner peripheral groove 116a spaced apart from the inner peripheral groove 116b is formed in the sensor ring 116 to contain the balls 118 therein. The balls 118 are fitted only in the spiral grooves 113a and moreover are capable of rolling and therefore, when the sensor ring 116 is moved by the force received by the balls 119, the movement of the sensor ring is not limited. On the other hand, even if there is a relatively great gap between the spiral grooves 113a and the balls 118, the sensor ring 116 will be supported substantially in parallelism to the output shaft 113 by the spaced apart balls 118 and 119 and the stable detection of the torque will become possible. Also, the load received by the balls is dispersed and therefore, the friction acting between the balls and the spiral grooves becomes small and smoother movement is secured. When the spacing between the inner peripheral grooves 116a and 116b is defined L and PCD of the balls is defined as D, if L/D ≥ 0.5, it will particularly be difficult for the sensor ring to be inclined and stability will be improved.

Such present embodiment is simple in structure and therefore can minimize the number of parts, and can obtain the effect that low costs become possible, that the use of the balls as moving members results in low friction and that the apparatus can be made small in the axial direction thereof and layout in designing becomes good.

While the present invention has been described above with respect to an embodiment thereof, the present invention should not be restricted to the above-described embodiment, but of course can be suitably changed and improved. For example, the number of the balls has been described as three each, but alternatively, may be four or more. Also, the slits may be formed in the output shaft and the spiral grooves may be formed in the input shaft.

As described above, the sensor ring is supported by two rows of balls and therefore, the inclination of the sensor ring with respect to the output shaft can be suppressed to the utmost. Also, one of the two rows of balls is used for the driving of the sensor ring, whereby a simple construction is achieved.

## Claims

1. Power steering apparatus (100) comprising: a first shaft (111; 113) connected by resilient means (121) to a second shaft (113; 111), said resilient means allowing relative angular displacement between said first shaft and said second shaft in proportion to a torque applied between said first shaft and said second shaft and a sensor ring (116) for detecting said relative angular displacement, said sensor ring being disposed around at least three spiral grooves (113a) provided in said first shaft, said sensor ring comprising a first circumferential groove (116b) along which are disposed a first plurality of balls (119), each one of said first plurality of balls being disposed along a respective spiral groove, and slits (111a) being provided in said second shaft for preventing rotation of said first plurality of balls about said second shaft such that said relative angular displacement causes said first plurality of balls to move said sensor ring axially relative to said first shaft, said sensor ring comprising a second circumferential groove (116a) along which are disposed a second plurality of balls (118), each one of said second plurality of balls being disposed along a respective spiral groove to support said sensor ring to prevent inclination thereof with respect to said first shaft.

2. Power steering apparatus as claimed in claim 1 wherein said first shaft is an output shaft (113) and said second shaft is an input shaft (111).

3. Power steering apparatus as claimed in claim 1 wherein said first shaft is an input shaft (111) and said second shaft is an output shaft (113).

4. Power steering apparatus as claimed in any preceding claim comprising a housing (101) in which is mounted a motor (102) having a rotary shaft.

5. Power steering apparatus as claimed in claim 4 when dependent on claim 2 or claim 3, comprising a power transmitting mechanism (104, 103a, 103) for connecting said rotary shaft and said output shaft allowing power to be transmitted from said motor to said output shaft.

6. Power steering apparatus as claimed in any one of the preceding claims comprising a detector (120) for detecting movement of said sensor ring axially relative to said first shaft.

7. Power steering apparatus as claimed in any one of the preceding claims wherein the number of slits (111a) corresponds to the number of spiral grooves (113a).

8. Power steering apparatus as claimed in any one of the preceding claims comprising biasing means (117) for biasing said sensor ring axially thereby urging said first plurality of balls and said second plurality of balls against a wall of a respective said spiral groove.

9. Power steering apparatus as claimed in any one of the preceding claims wherein said resilient means is a torsion bar (121).

## Patentansprüche

1. Servolenkvorrichtung (100), die umfaßt: eine erste Welle (111; 113), die über eine elastische Einrichtung (121) mit einer zweiten Welle (113; 111) verbunden ist, wobei die elastische Einrichtung Winkelverschiebung der ersten Welle und der zweiten Welle zueinander proportional zu einem Drehmoment zuläßt, das zwischen der ersten Welle und der zweiten Welle wirkt, sowie einen Sensorring (116), der die Winkelverschiebung zueinander erfaßt, wobei der Sensorring um wenigstens drei spiralförmige Nuten (113a) herum angeordnet ist, die in der ersten Welle vorhanden sind, und der Sensorring eine erste Umfangsnut (116b) umfaßt, in der eine erste Vielzahl von Kugeln (119) angeordnet ist, wobei jede der ersten Vielzahl von Kugeln in einer entsprechenden Spiralnut angeordnet ist und Schlitze (111a) in der zweiten Welle vorhanden sind, die Drehung der ersten Vielzahl von Kugeln um die zweite Welle herum verhindern, so daß die Winkelverschiebung zueinander bewirkt, daß die erste Vielzahl von Kugeln den Sensorring axial in bezug auf die erste Welle bewegt, wobei der Sensorring eine zweite Umfangsnut (116a) umfaßt, in der eine zweite Vielzahl von Kugeln (118) angeordnet ist, und jede der zweiten Vielzahl von Kugeln in einer entsprechenden Spiralnut angeordnet ist, um den Sensorring zu tragen und Neigung desselben in bezug auf die erste Welle zu verhindern

2. Servolenkvorrichtung nach Anspruch 1, wobei die erste Welle eine Ausgangswelle (113) ist und die zwei Welle eine Eingangswelle (111) ist.

3. Servolenkvorrichtung nach Anspruch 1, wobei die erste Welle eine Eingangswelle (111) ist, und die zweite Welle eine Ausgangswelle (113) ist.

4. Servolenkvorrichtung nach einem der vorangehenden Ansprüche, die ein Gehäuse (101) umfaßt, in dem ein Motor (102) mit einer Drehwelle angebracht ist.

5. Servolenkvorrichtung nach Anspruch 4, wenn abhängig von Anspruch 2 oder 3, die einen Kraftübertragungsmechanismus (104, 103a, 103) umfaßt, der die Drehwelle und die Ausgangswelle miteinander verbindet, so daß Kraft von dem Motor auf die Ausgangswelle übertragen werden kann.

6. Servolenkvorrichtung nach einem der vorangehenden Ansprüche, die einen Detektor (120) umfaßt, der axiale Bewegung des Sensorrings in bezug auf die erste Welle erfaßt.

7. Servolenkvorrichtung nach einem der vorangehenden Ansprüche, wobei die Anzahl der Schlitze (111a) der Anzahl der Spiralnuten (113a) entspricht.

8. Servolenkvorrichtung nach einem der vorangehenden Ansprüche, die eine Spanneinrichtung (117) umfaßt, die den Sensorring axial spannt und so die erste Vielzahl von Kugeln und die zweite Vielzahl von Kugeln an eine Wand der entsprechenden Spiralnut drückt.

9. Servolenkvorrichtung nach einem der vorangehenden Ansprüche, wobei die elastische Einrichtung eine Torsionsfeder (121) ist.

## Revendications

1. Dispositif de direction assistée (100) comprenant: un premier arbre (111; 113) relié par des moyens résilients (121) à un deuxième arbre (113; 111), lesdits moyens résilients permettant un déplacement angulaire relatif entre ledit premier arbre et ledit deuxième arbre en proportion d'un couple appliqué entre ledit premier arbre et ledit deuxième arbre, et une couronne de capteur (116) destinée à détecter ledit déplacement angulaire relatif, ladite couronne de capteur étant disposée autour d'au moins trois rainures en spirale (113a) ménagées dans ledit premier arbre, ladite couronne de capteur comprenant une première rainure circonférentielle (116b) le long de laquelle est disposée une première pluralité de billes (119), chaque bille de ladite première pluralité de billes étant disposée le long d'une rainure en spirale respective, et des fentes (llla) étant ménagées dans ledit deuxième arbre pour empêcher la rotation de ladite première pluralité de billes autour dudit deuxième arbre, de manière à ce que ledit déplacement angulaire relatif amène ladite première pluralité de billes à déplacer ladite couronne de capteur axialement par rapport audit premier arbre, ladite couronne de capteur comprenant une deuxième rainure circonférentielle (116a) le long de laquelle est disposée une deuxième pluralité de billes (118), chaque bille de ladite deuxième pluralité de billes étant disposée le long d'une rainure en spirale respective de façon à soutenir ladite couronne de capteur afin d'empêcher une inclinaison de celle-ci par rapport audit premier arbre.

2. Dispositif de direction assistée selon la revendication 1, dans lequel ledit premier arbre est un arbre de sortie (113) et ledit deuxième arbre est un arbre d'entrée (111).

3. Dispositif de direction assistée selon la revendication 1, dans lequel ledit premier arbre est un arbre d'entrée (111) et ledit deuxième arbre est un arbre de sortie (113).

4. Dispositif de direction assistée selon une quelconque revendication précédente, comprenant un corps (101) dans lequel est monté un moteur (102) ayant un arbre rotatif.

5. Dispositif de direction assistée selon la revendication 4 lorsqu'elle dépend de la revendication 2 ou de la revendication 3, comprenant un mécanisme de transmission de puissance (104, 103a, 103) destiné à relier ledit arbre rotatif audit arbre de sortie, ce qui permet de transmettre une puissance dudit moteur audit arbre de sortie.

6. Dispositif de direction assistée selon l'une quelconque des revendications précédentes, comprenant un détecteur (120) destiné à détecter le mouvement de ladite couronne de capteur axialement par rapport audit premier arbre.

7. Dispositif de direction assistée selon l'une quelconque des revendications précédentes, dans lequel le nombre de fentes (llla) correspond au nombre de rainures en spirale (113a).

8. Dispositif de direction assistée selon l'une quelconque des revendications précédentes, comprenant des moyens de sollicitation (117) destinés à solliciter ladite couronne de capteur axialement, ce qui pousse ladite première pluralité de billes et ladite deuxième pluralité de billes contre une paroi d'une rainure en spirale respective.

9. Dispositif de direction assistée selon l'une quelconque des revendications précédentes, dans lequel lesdits moyens résilients sont constitués d'une barre de torsion (121).
